# EUROPEAN PATENT APPLICATION

(11) **EP 2 442 069 A1**
(43) Date of publication of application: **18.04.2012**
(21) Application number: 10187318.0
(22) Date of filing: 12.10.2010
(51) Int. Cl.: G01C 1/02, G01C 3/02, G01C 15/00, F16M 11/02, G12B 17/00, G02B 27/64, G12B 7/00

(54) **A support arrangement for a registration device such as a surveying instrument**

(71) Applicant: SP Sveriges Tekniska Forskninginstitut AB, 501 15 Borås (SE)
(72) Inventor: Bergstrand, Sten, SE-427 38, Billdal (SE); Rüdiger, Haas, SE-439 94, Onsala (SE)
(74) Representative: Fritsche, Daniel

(57) **Abstract**

The invention relates to a support arrangement (3) for a registration device (4), forming a first surface (7) having a known position in relation to a ground (14), and a second surface (8) adapted to support a registration device (4), said first and second surfaces (7, 8) having an asserted fixed relationship, wherein said support arrangement (3) in use is subjected to external time dependent influence resulting in an undesired displacement of said second surface (8) in relation to said first surface (7). Said support arrangement (3) is provided with means (16) for measuring a parameter from which said displacement at least partially may be obtained, and means (17) for obtaining said displacement or a value analogous with said displacement from said parameter.

Further, the invention relates to a support arrangement (3) comprising a registration device (4), such as a total station (4), and a levelling means being adapted to compensate a value registered by said registration device (4) for said displacement.

## Description

### Field of the Invention

The present invention relates to a support arrangement for a registration device, forming a first surface having a known position in relation to a ground, and a second surface adapted to support a registration device, said first and second surfaces having an asserted fixed relationship. In particular, the present invention relates to a support arrangement for a total station.

### Background of the Invention

Within geodetic measuring or surveying the terrestrial or three-dimensional position of points and the distances and angles between them are accurately determined in relation to a coordinate system. A device used within the surveying is a total station, which is a theodolite with an electronic distance measurement device. Although it is possible to measure to virtually any target, accurate measurements require designated retroreflectors or prisms.

Since their introduction, total stations have made the technological shift from being manually operated optical-mechanical devices to being at least partially electronically operated. During the development of the total stations, and other measurement devices, there has also been a desire for increasing the angular resolution of the measurements for decreasing error ranges.

Today, robotic total stations are widely used. A robotic total station is in principle a remote-controlled total station. One person may both control the total station remotely and hold the reflector. Further, a robotic total station may be controlled by computer programs, which allow continuous monitoring over a long measurement period for monitoring small target movements.

However, it has turned out that the time series resulting from such continuous monitoring may be difficult to interpret. Especially, the resulting data comprise time dependent parts having an unknown origin. Further, repeated measurements discerning variations of an object's position during a relatively long time period has revealed seemingly systematic variations that exceed the angular resolution of the total stations which current error mitigation techniques (e.g. two face measurements and forward resections) do not address. Therefore, it is desirable to take care of such data for further refining of the accuracy of the total stations in particular, and measurement or registration devices in general.

Hence, there is a need for improved total stations or other measurement or registration devices, and more specifically of the type that overcomes or at least alleviates the prior art problems of total stations.

### Summary of the Invention

In view of the above-mentioned and other drawbacks of the prior art, a general object of the present invention is to alleviate said drawbacks.

According to a first aspect of the present invention a support arrangement for a registration device is provided. The invention is based on the insight that the second surface is in use subjected to external time dependent influences resulting in an undesired displacement of said second surface in relation to said first surface. The support arrangement forms a first surface having a known position in relation to a ground, and a second surface adapted to support a registration device, said first and second surfaces having an asserted fixed relationship. Said support arrangement in use is subjected to external time dependent influence resulting in an undesired displacement of said second surface in relation to said first surface. Said support arrangement is provided with means for measuring a parameter from which said displacement at least partially may be obtained, and means for obtaining said displacement or a value analogous with said displacement from said parameter.

A registration device may be a total station, a theodolite, a GNSS-antenna, an image capturing device such as a camera, binoculars, a telescope, a microscope, a gun sight, a laser tracker, a sonar, a radar etc.

The external time dependent influence may be differential radiation from the sun, temperature differences at different parts of the support arrangement due to winds, winds resulting in bending of the support arrangement or other similar occurrences. The occurrences are such that they are present no matter what. The occurrences result in *i.a*. bending of the support arrangement or of temperature induced material expansion or contraction thereof, such that the location of the second surface in relation to the known first surface becomes undefined and varies over time.

Such a support arrangement is advantageous, since it allows for measuring a displacement of the second surface in relation to the first surface. Such a displacement may be used for compensating a value registered by the registration device for eliminating registration errors due to said external time dependent influences, which the support arrangement is subjected to during a measurement period. It should be noted that the inventive support arrangement is capable of measuring a translation in each axis in a Cartesian coordinate system, and a rotation around the two of said axes that represent the horizontal plane. If also using a fixed observation origin, also a rotation around the third vertical axis may be made.

In an exemplary embodiment, said means for measuring said parameter is at least one temperature sensor arranged between said first surface and said second surface to measure a temperature of said support arrangement.

Such temperature sensor allows measurement of a temperature of said support arrangement or portion of said support arrangement. Thus, material effects due to the external influence may be determined.

In an exemplary embodiment, said means for measuring said parameter is at least one strain gauge arranged along the extension of the support arrangement in a direction between said first surface and said second surface.

Such strain gauge allows for measurement of a contraction or extension of the support arrangement.

In an exemplary embodiment, said means for measuring said parameter is at least one position sensor arranged along the extension of the support arrangement in a direction between said first surface and said second surface.

Such position sensor allows for direct measurement of the distance between the first and second surfaces.

In an exemplary embodiment, said means for measuring said parameter is at least one remote sensing device. Remote sensing devices exhibit *i.a*. the advantage that the distance to be measured need not be bridged.

In an exemplary embodiment, said remote sensing device is an image capturing device and said means for obtaining said displacement comprises means for image analysis.

In an exemplary embodiment, said remote sensing device is an interferometer. Such devices study a pattern of interference created by two or more waves when they superimpose after reflection on a surface to be measured. If several such measurement locations are to be utilised, one single laser may be used to feed all locations.

In an exemplary embodiment, said remote sensing device is an angle measuring device, such as an autocollimator.

In an exemplary embodiment, said displacement is a translation and/or an inclination.

In this application, an inclination is intended to mean an alignment error, which is a result of an inclination of the registration device, for instance due to an inclination of the second surface in relation to the first surface. For being able to distinguish such errors from intentional rotations of the registration device, such an error is called an "inclination" in this application, even if it actually mathematically is a rotation of the base plane of the registration device round horizontal x- and/or y-axes.

In an exemplary embodiment, said first and second surfaces are interconnected by length adjustable support elements, each support element being provided with a means for measuring a parameter. By being able to adjust each length of the support elements the second upper surface may be levelled in relation to the horizon such that proper measurements may be performed by the registration device.

In an exemplary embodiment, each means for measuring a parameter is located within a longitudinal cavity of each support arrangement. Hereby they are protected from external interference.

In an exemplary embodiment, said support arrangement further comprises a tribrach having three adjustable support elements.

The tribrach forms said first and second surfaces by its lower and upper surfaces respectively. Such a tribrach is used to fine tune the levelling of the second surface of the support arrangement such that the registration device is located normally essentially horizontally. However during use in open air it is subjected to the time dependent influence hence altering the position of the second surface and consequently the registration device there upon. By measuring a parameter at each support element of the tribrach, an inclination of the second surface in relation to the first surface due to the external time dependent influence may be obtained. Such an inclination may be used for compensating a value registered by the registration device for eliminating registration errors due to external time dependent influence, which the support arrangement is subjected to during a measurement period.

In an exemplary embodiment, said support elements are thread studs with corresponding foot screws. Such thread studs and corresponding foot screws are advantageous, since they allow for adjusting the distance between the first and second surfaces individually at each thread stud. Hence, the second surface may be adjusted horizontally even if the first surface is not exactly horizontally levelled.

In an exemplary embodiment, said support arrangement further comprises a registration device and levelling means, said levelling means being adapted to compensate a value registered by said registration device for said displacement based upon said displacement or said value analogous with said displacement.

Such levelling means are advantageous, since they allow for compensation of a value registered by the registration device. Hence, registration errors due to external time dependent influence, which the support arrangement is subjected to during a measurement period, may be eliminated and the precision of the registration device may be refined. Further, by integrating the levelling means and the registration device in the support arrangement, there is no need for separate devices for registration or compensation of a value registered by the registration device.

According to a second aspect to the present invention a system for compensating measurement data from a registration device due to measurement errors is provided. Said registration device is in use located on a support arrangement forming a first surface having a known position in relation to a ground, and a second surface is adapted to support said registration device. Said first and second surfaces have an asserted fixed relationship, wherein said support arrangement in use is subjected to external time dependent influence resulting in an undesired displacement of said second surface in relation to said first surface. The system is provided with means for measuring a parameter from which said displacement at least partially may be obtained, and means for obtaining said displacement or a value analogous with said displacement from said parameter.

Such a system exhibits similar advantages as are described in connection with the support arrangement above.

In an exemplary embodiment, said compensation is made mathematically by a processor.

According to a third aspect to the present invention a registration arrangement comprising a registration device and a support arrangement is provided. Said support arrangement forms a first surface having a known position in relation to a ground, and a second surface which is adapted to support said registration device. Said first and second surfaces have an asserted fixed relationship, wherein said registration arrangement in use is subjected to external time dependent influence resulting in an undesired displacement of said second surface in relation to said first surface. Said registration arrangement is provided with means for measuring a parameter from which said displacement at least partially may be obtained, and means for obtaining said displacement or a value analogous with said displacement from said parameter.

Such a registration arrangement exhibits similar advantages as are described in connection with the support arrangement above.

In an exemplary embodiment, said registration device is a total station.

In an exemplary embodiment, said first and second surfaces are interconnected by length adjustable support elements, each support element being provided with a means for measuring a parameter.

In an exemplary embodiment, said support arrangement further comprises a tribrach having three adjustable support elements.

In an exemplary embodiment, said support elements are thread studs with corresponding foot screws.

Further features of, and advantages with, the present invention will become apparent when studying the appended claims and the following description. The skilled addressee realizes that different features of the present invention may be combined to create embodiments other than those described in the following, without departing from the scope of the present invention.

### Brief Description of the Drawings

The various aspects of the invention, including its particular features and advantages, will be readily understood from the following detailed description and the accompanying drawings, in which:
Fig. 1 a is a schematic illustration of a prior art support arrangement and a registration device in form of a total station together with a reflector;
Fig. 1b is an illustration of a prior art support arrangement;
Fig. 2 is a schematic illustration of a prior art compensation system that mitigates inclination misalignments or, equivalently, rotations around the x- and y- axes,
Fig. 3a and 3b are plots of measurement data for angular read-outs by the total station arranged on a prior art support arrangement;
Fig. 4a and 4b are plots of measurement data for temperature variations in the support elements of the support arrangement and corresponding incoming solar radiation flux density corresponding to the data in Fig. 3a and 3b;
Fig. 5 is a plot of measurement data for temperature variations at each support element;
Fig. 6 is a schematic illustration of an exemplary dislocation of a reference point of the total station due to a displacement of the second surface of the support arrangement relative the first surface of the support arrangement, and the resulting difference for the relation of the registration device and a set of targets;
Fig. 7 illustrates schematically a displacement of a total station and its reference point due to a displacement of the second surface of the support arrangement relative the first surface of the support arrangement; and
Fig. 8 illustrates schematically a displacement of a total station and its reference point due to a displacement of the second surface of the support arrangement relative the first surface of the support arrangement when the first surface is inclined.

### Detailed Description of Exemplary Embodiments

Throughout the whole description words as upper, lower, above, and below are intended to have their ordinary meaning when the support arrangement is arranged on a substantially horizontal support. Any reference to a local or general coordinate system generally refers to a right-handed Cartesian coordinate system, in which the x- and y-axes lie in the horizontal plane and the z-axis lies in the vertical plane. Other coordinate systems may be used without deviating from the intention of the present inventive concept.

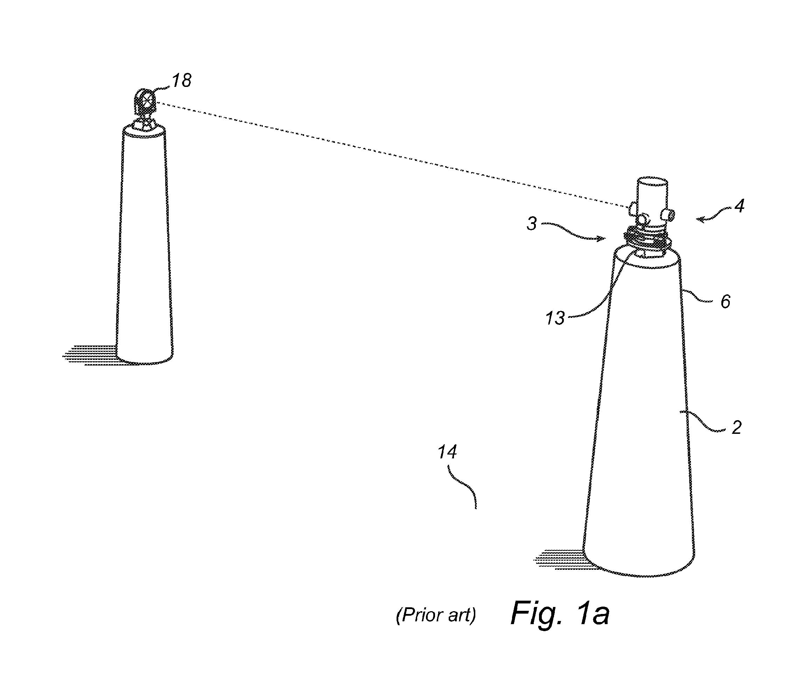

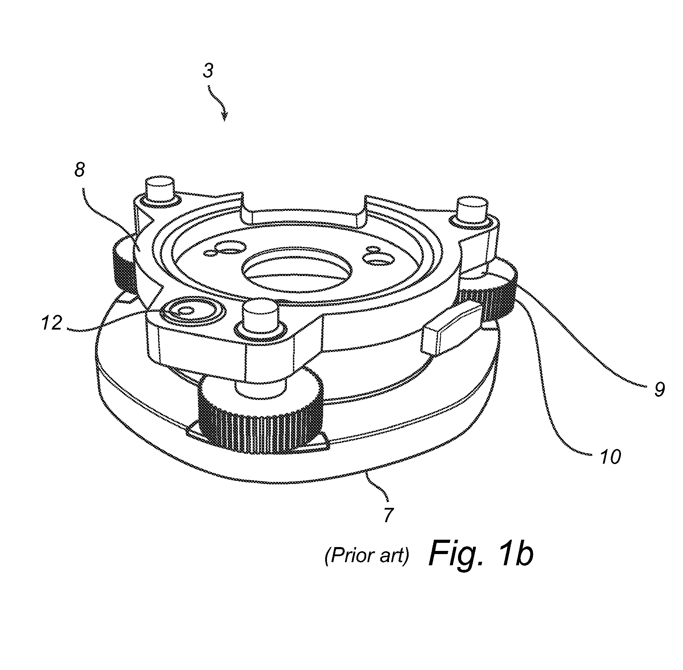

Fig. 1 schematically illustrates a prior art support arrangement and a registration device. The support arrangement 3 is in form of a tribrach, which is arranged on a support 2. A registration device 4 in form of a total station is arranged on the tribrach 3.

The support 2 is in form of a concrete pillar and comprises an upper portion 6 comprising a tribrach supporting area 13.

The tribrach 3 comprises a first surface 7 in form of a lower base plate and a second surface 8 in form of an upper plate, located vertically above the base plate. Both the base plate 7 and the upper plate 8 are substantially triangular. The upper plate 8 is arranged to the base plate 7 by three support elements 9 adjacent to each corner of each plate 7, 8. In the embodiment in figure 1, the support elements 9 are in form of thread studs and matching foot screws 10, arranged on each of the thread studs 9 for allowing movements of the upper plate 8 in relation to the base plate 7. By turning the foot screws 10 differently the upper plate 8 can be tilted in relation to the base plate 7. The base plate 7 is adapted to be arranged on the upper portion 6 of the support 2. The upper plate 8 is adapted to receive a registration device 4, such as a total station 4. The upper plate 8 of the tribrach 3 comprises three supporting pins (not shown) and a circular level 12. The supporting pins are adapted to receive corresponding features at the bottom of the registration device 4 such that the position of the registration device 4 in relation to the tribrach 3 is well defined and generally invariant.

Before a measurement the tribrach supporting area 13 of the upper portion 6 of the support 2 is arranged roughly horizontally. Thereafter the tribrach 3 is arranged to the support 2 such that an underside of the base plate 7 lies against the tribrach supporting area 13 of the upper portion 6 of the support 2. In use, the second surface 8 of the upper plate 8 should be horizontal for achieving a levelled horizon for the total station 4, since it ensures that the vertical axis of the registration device 4 is normal to a horizontal plane. Therefore, the upper plate 8 is levelled substantially horizontally using the foot screws 10 such that a bubble of a circular level 12 on the tribrach 3 is centred within a circle of the circular level 12. Such manual horizontal alignment is however always beset with a certain degree of misalignment.

Prior a measurement, the height between the tribrach 3 and a reference point on a ground 14 may be measured using a measuring tape or similar measurement tool. By entering the height into the total station 4, the height is used by the total station 4 during the measurements for correcting for angular errors due to the height difference between the known reference point on the ground 14 and the total station 4. Alternatively, the measurements of the total station 4 may be in relation to a temporary local coordinate system, for instance using three fixed reflectors.

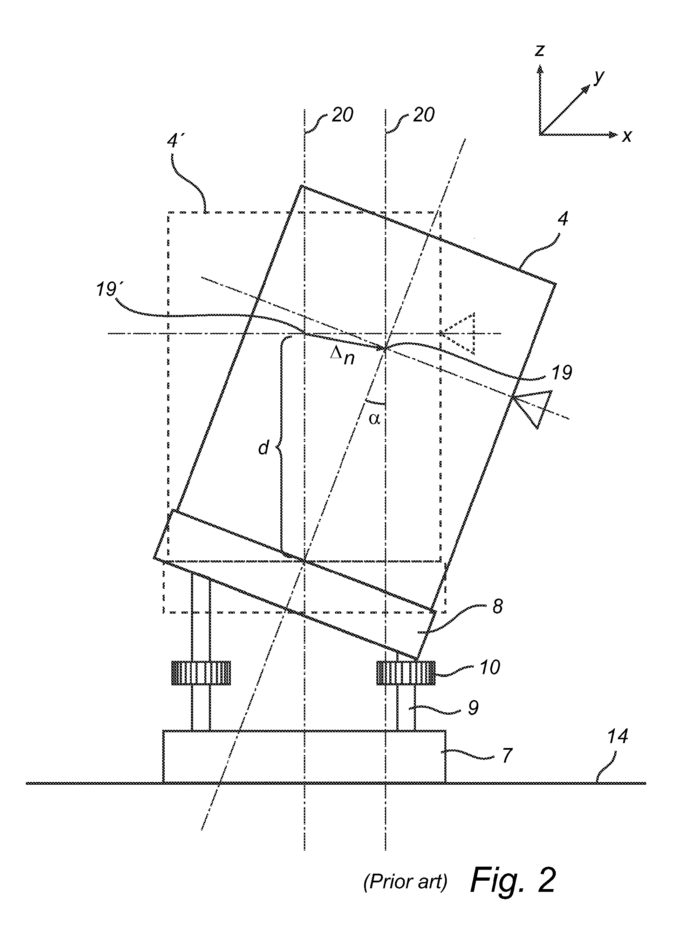

Generally, prior art total stations 4 relate an observation origin to an intersection of a vertical axis of the total station 4 and a line of observation through a registration eye of the total station 4, denoted as a reference point 19 in figure 2. Under perfect conditions the vertical axis of the total station 4 should be aligned with a local plumb line 20 and the rotational axes with the horizontal and vertical planes. Due to e.g. imperfections in the manual horizontal alignment of the upper plate 8 in relation to the horizon, tilt or subsidence of the support 2, or vibrations in the ground resulting in imperfections in horizontal alignment of the total station 4, the vertical axis of the total station 4 may be misaligned by an angle α (having components in the xz-plane and in the yz-plane) in relation to a local plumb line 20, resulting in an inclination error.

Such imperfections are in the following referred to by the generic term "inclination misalignments".

Such misalignment of the vertical axis in relation to the local plumb line 20 results in that the reference point 19 of the total station 4 is dislocated in relation to an intended position in the xz-plane and in the yz-plane. Such a dislocation is denoted with Δₙ in this application. Generally, prior art total stations 4 comprise a prior art internal compensation system for compensation of values measured by the total station 4 for such angular misalignments resulting in such dislocations Δₙ of the reference point 19. Such a misalignment and the prior art compensation method are illustrated in figure 2. Figure 2 illustrates an initial inclination error of the total station 4 due to imperfections in the manual horizontal alignment of the upper plate 8 in relation to the horizontal plane. The total station 4 is inclined by an angle α (here in the xz-plane) in relation to a perfectly aligned position indicated with a total station 4' drawn with dashed lines. The inclination error α in relation to the local plumb line 20 of the total station 4 results in the dislocation Δₙ of the reference point 19. The prior art compensation system computationally adjusts the misaligned vertical axis to the local plumb line 20 by means of mathematical rotations round x- and y-axes. Thus, the prior art internal compensation system may compensate for the angle α using basic trigonometric functions when the angle of misalignment, α, of the vertical axis in relation to the local plumb line 20 is known. Hence, a value measured by the prior art total station 4 may be compensated for the angle α. It should be noted however that this prior art compensation system only compensates for misalignments of the total station 4 in relation to the horizon, *i.e*. for inclinations of the base of the total station 4 in relation to the x- and y-axes.

It is clearly visible from figure 2 that when the prior art internal compensation system has mathematically compensated for the misalignment α in relation to the local plumb line 20, the reference point 19 of the total station 4 also has been translated in the x- and z-directions (and may be also in the y-direction).

Suitably, the total station 4 is a robotic total station. Hence, the total station may be used for continuous monitoring over a long measurement period for monitoring relatively small movements of a target 18.

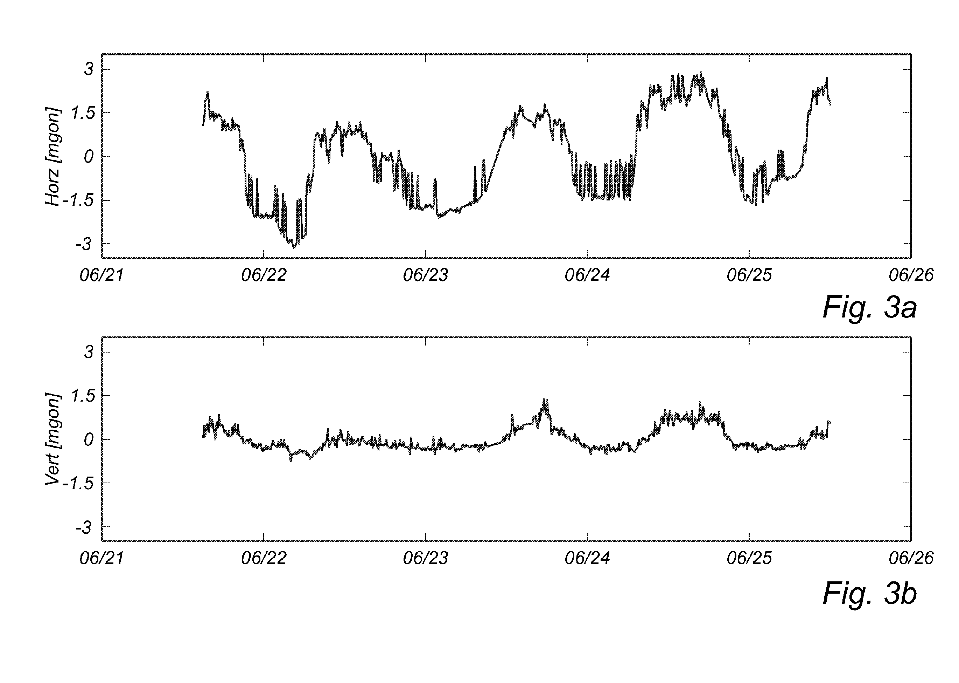

Generally, the base plate 7 and the upper plate 8 have been supposed to have a fixed relationship during a measurement period. However, during repeated measurements over longer periods of times discerning the variations of an object's position using prior art tribrachs 3 arranged on a fixed support 2 for instance in form of a concrete pillar casted fixedly to a rock 14, systematic unexpected variations that exceeds the angular resolution of a conventional prior art total station 4 have been found. Such fixed supports 2 are generally advantageous since they allow the base plate 7 of the tribrach 3 to be firmly fastened. Thus, the risk of movements of the support 2 for the tribrach 3 is reduced. Figures 3a and 3b illustrates plots of measurement data for angular read-outs by a prior art total station 4 arranged on a prior art tribrach 3. The data span four consecutive calendar days and the position of the target relative to the total station 4 should have been invariant during the measurement period. Figure 3a however illustrates horizontal angular read-out variations of the target position and figure 3b illustrates vertical angular read-out variations of the target position. The measurement data in figures 3a and 3b are collected using forward resections in two faces and compensated using the prior art internal compensation system of prior art total stations 4. It is evident that there are periodical angular variations in horizontal direction in spite of the fact that the object's actual position has not been willingly or knowingly changed horizontally. In addition, there are variations in vertical direction in spite of the fact that the actual object's position has not been willingly or knowingly changed vertically.

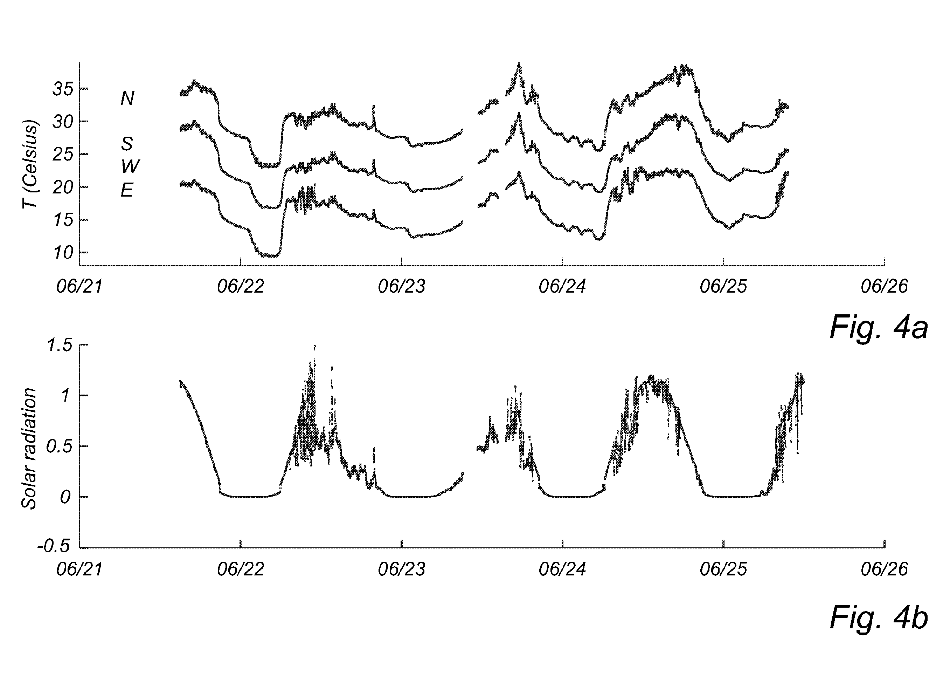

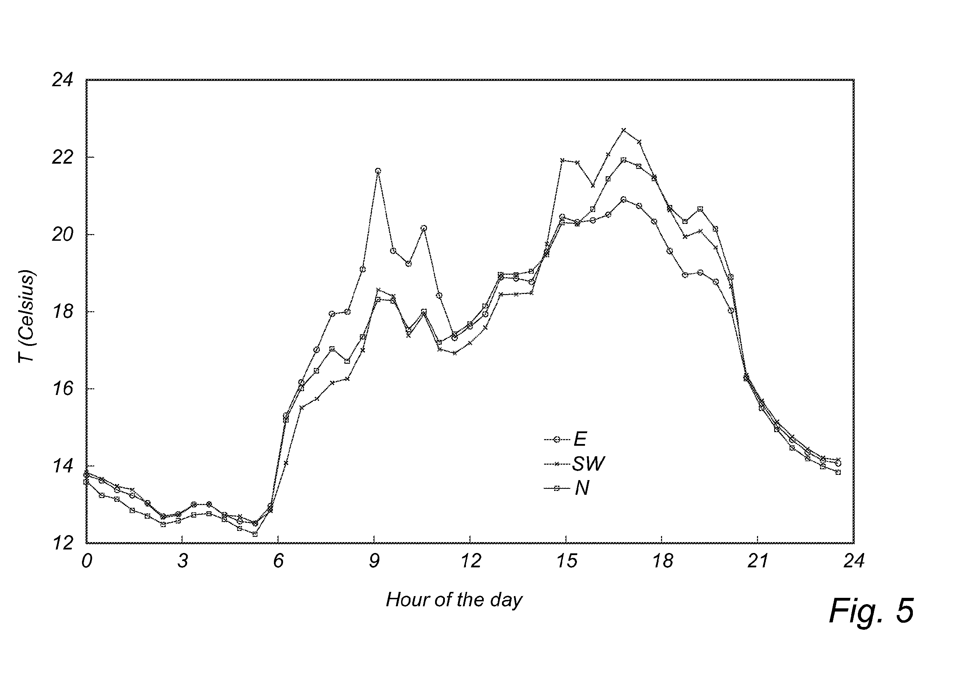

The inventors have analysed the data and they have realised that the tribrach 3 is subjected to external time dependent influence, such as sunshine, rain, wind, ice formation etc. Such external influence results at least in differential heating or cooling of at least one of the components of the tribrach 3, for instance by radiation or convection. Figures 4a and 4b illustrates plots of measurement data for temperature variations in the support elements 9 of the tribrach 3 and incoming solar radiation flux density. The plot comprises data for a temperature sensor at each thread stud 9. For illustration purposes, the data for the thread stud at north (indicated with an N in the figure) comprise an offset of 14 degrees Celsius and the data for the thread stud at South comprise an offset of 7 degrees Celsius. The data span four consecutive calendar days and correspond to the data in figures 3a and 3b. From figure 4a it is evident that the temperature in the support elements 9 differs periodically between day and night. The temperature variations correspond to the periodical angular variations in figures 3a and 3b. The influence on each support element 9 is illustrated in figure 5, which is a plot of measurement data for temperature variations at each support element 9. The data at each measurement point is an average over data at the same time during four consecutive days. From figure 5 it appears that a temperature at a support element 9 positioned towards east (circles) is warmest in the morning, the south-western support element 9 (crosses) is warmest in the afternoon and the northern support element 9 (squares) is warmest in the evening.

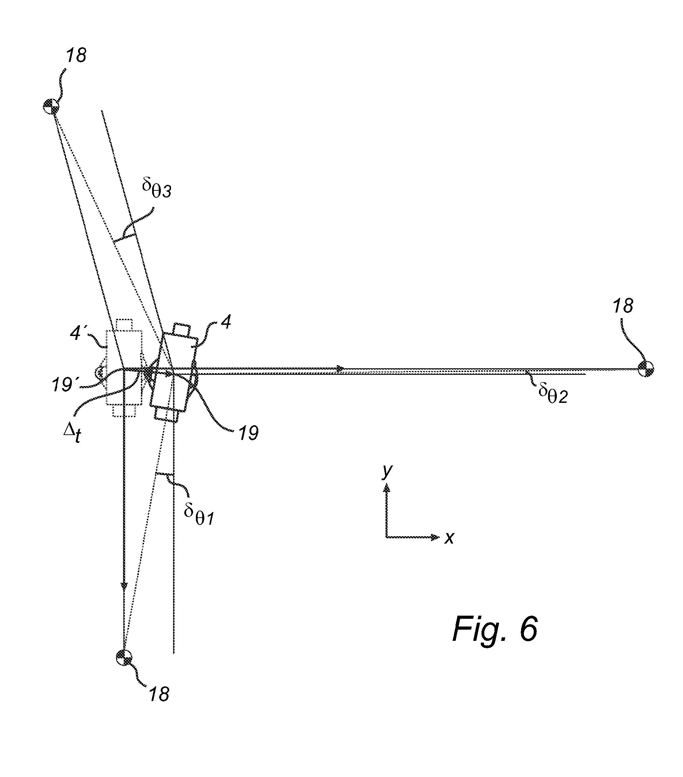

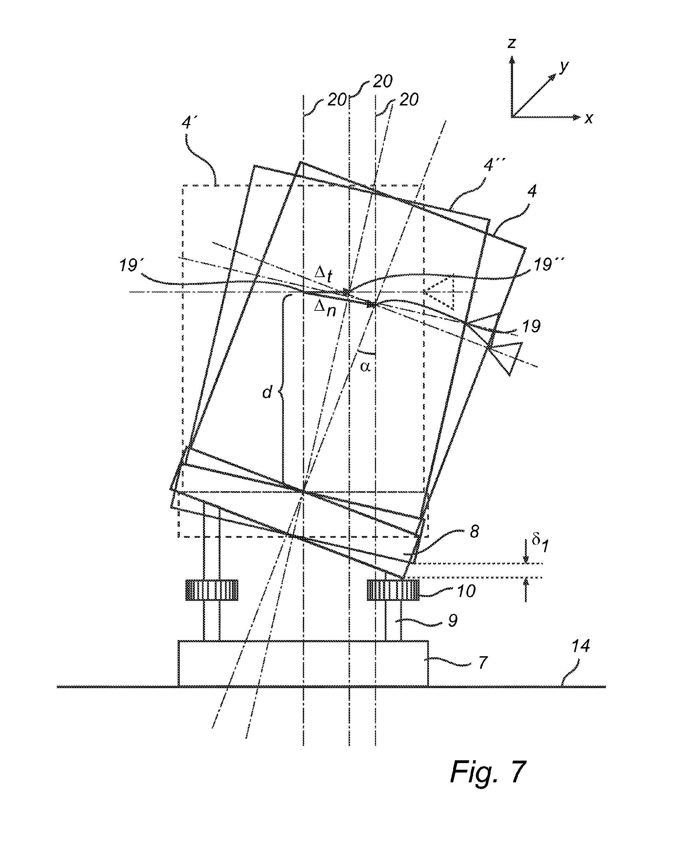

The time dependent external influence results in material influences in form of expansion or contraction of any one or all of the base plate 7, the upper plate 8, and the thread studs 9. A suitable unit for the expansion or contraction is µm mm⁻¹ °C⁻¹. The expansion or contraction may be due to a temperature variation or some other effect, such as absorption of liquid or drying, if the material of the tribrach 3 is such that absorption or drying is possible. Such expansion or contraction causes an undesired displacement, Δₚ, in form of a translation and/or an inclination of the second surface 8 of the upper plate 8 in relation to the first surface 7 of the base plate 7. Naturally, the displacement, Δₚ, may be a combination of translations and/or rotations. A displacement Δₚ of the second surface 8 in relation to the first surface 7 results in an additional displacement of the total station 4, which results in erroneous angle readings of the total station 4, in spite of the prior art internal compensation system, and gives rise to imaginary object movement observations. That is, such a displacement, Δₚ, of the upper plate 8 due to time dependent external influence results in that the relation between a reference point 19 of the total station 4 and the reflector 18 is changed with a displacement Δₑ of the reference point 19 of the total station 4. However, a total displacement Δₜ of the reference point 19 of the total station 4 is a combination of the displacement, Δₙ, due to misalignments in relation to the horizon (rotations around the x- and y-axes, *i.a*. inclination misalignments as discussed above) of the total station 4, and the displacement Δₑ deriving from the displacement Δₚ of the upper plate 8 in relation to the base plate 7 due to time dependent external influence. Such a displacement Δₜ is illustrated in figure 6 from above and schematically in figures 7-9. In figure 6 an at least translational displacement Δₜ of the reference point 19 of the total station is illustrated in relation to a set of targets 18. An assumed position of the total station is indicated by the total station 4', which is drawn with dashed lines. The angular displacements of the reference point 19 of the total station 4 in the horizontal plane in relation to the targets 18 are denoted with δ_{θ1}, δ_{θ2}, and δ_{θ3}.

Figure 7 is a highly schematical, two-dimensional illustration of a total displacement of a total station 4" due to time dependent external influences and inclination misalignments as discussed above. The total station 4 is initially inclined in relation to a perfectly aligned position indicated with a total station 4' drawn with dashed lines. The inclination error α in relation to the local plumb line 20 of the total station 4 results in the displacement Δₙ of the reference point 19. The reference point 19" of the displaced total station 4" is illustrated. Material effects due to the time dependent external influences are illustrated with one thread stud 9, which is expanded with a length δ₁ substantially in a direction which is normal to the surface of the base plate 7 and the upper surface of the support 2 of the base plate. In the situation illustrated in figure 7 it is obvious that the total displacement Δₜ of the reference point 19" of the total station 4" is a combination of the displacement Δₙ due to inclination misalignments of the total station and the displacement Δₑ due to time dependent external influence. In addition to being initially inclined the total station 4 may be inclined depending on other reasons than initial inclination errors during the measurement period as discussed above. If the upper plate 8 as well as the lower surface 7 initially are exactly parallel and in addition perfectly aligned with the horizon, and the average temperature remains constant, the total displacement Δₜ is merely a result of the displacement of a total station 4" due to time dependent external influence, e.g. solar path.

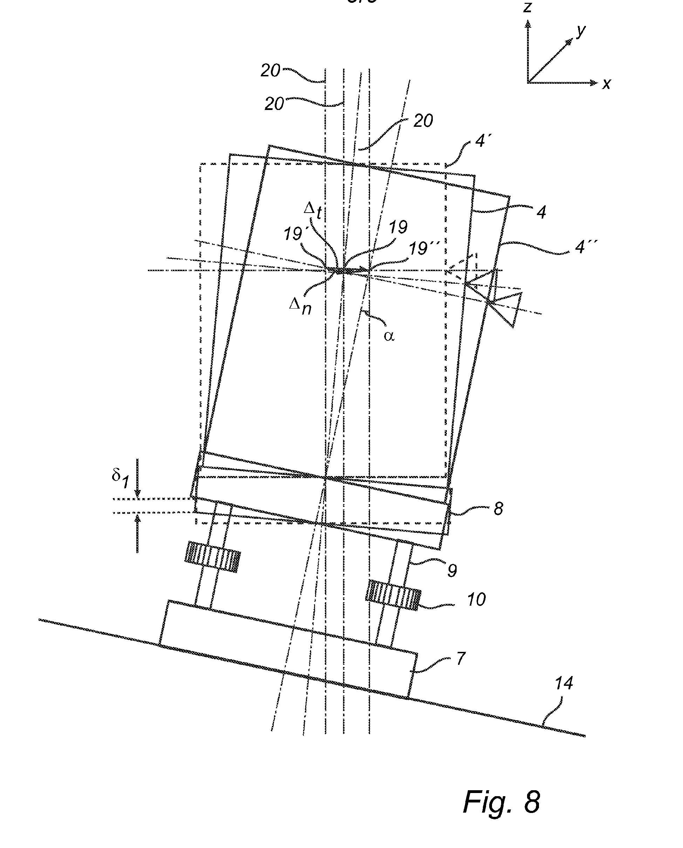

Figure 8 is a highly schematical, two-dimensional illustration of a total displacement Δₜ of a total station 4" due to time dependent external influence and inclination misalignments. In the situation illustrated in figure 8 the total station 4 is initially inclined in relation to a perfectly aligned position indicated with a total station 4' drawn with dashed lines. It is noted that the support 2 is inclined in this figure in contrast to the situation of figure 7 in which the support 2 is horizontal. The inclination error α in relation to the local plumb line 20 of the total station 4 results in the displacement Δₙ of the reference point 19. The reference point 19" of the displaced total station 4" is illustrated. Material effects due to the time dependent external influences are illustrated with one thread stud 9, which is expanded with a length Δₚ. In the situation illustrated in figure 8 it is obvious that the total displacement Δₜ of the reference point 19" of the total station 4" is a combination of the displacement Δₙ due to inclination misalignments of the total station and the displacement Δₑ due to time dependent external influence. In addition to being initially inclined the total station 4 may be inclined depending on other reasons than initial inclination errors during the measurement period. Such an initial inclination of the base plate 7 may result in a larger displacement of the reference point 19 of the total station 4 when the thread studs 9 are adjusted, since the length variation of the thread studs 9 occurs in a direction that is substantially normal to the upper surface of the base plate 7.

The displacement Δₑ due to time dependent external influences of the reference point 19 of the total station 4 may be derived from the displacement Δₚ of the upper plate 8 in relation to the base plate 7 using basic well known trigonometric functions. The displacement Δₚ may be measured. The distance between the base of plate 7 and the reference point 19 of the total station 4, will function as a lever. Consequently, a small angular displacement Δₚ of the upper plate 8 results in a significantly larger displacement of the reference point 19 of the total station 4. If the displacement Δₙ due to inclination misalignments are zero, the displacement Δₜ of the reference point 19 of the total station 4 derives merely from the undesired displacement due to time dependent external influences, as is illustrated in figure 8. The displacements in the figures 6-8 are exaggerated for illustrative purposes. Thus, without knowing better, when analysing data from measurements during which such displacements have occurred it seems like a target 18, in form of the reflector has moved, but in reality it is the reference point 19 of the total station 4 that has moved. The total displacement may be divided into translational and rotational contributions, δₓₓ, δ_{xy}, δ_{xz} etc. (in total six contributions) along and/or round axes in a Cartesian coordinate system.

Generally, the displacement Δₑ of the reference point 19 of the total station 4 due to time dependent external influences resulting from a displacement of the upper plate 8 in relation to the base plate 7, may be a translation in an arbitrary direction and/or an inclination. According to one embodiment of the present invention such inclination misalignments around the x- and y-axes can at least partly be handled by the prior art internal compensation system and the translational displacements of the reference point 19 of the total station 4 may be derived from the translational displacement of the upper plate 8 in relation to the base plate 7. Thus, it may be sufficient in this embodiment to determine the translational displacement of the upper plate 8 in relation to the base plate 7 for being able to compensate the measurement values from a total station 4 for the time dependent external influences. Therefore, in this embodiment of the present invention, the support arrangement handles the compensation of translational displacements due to time dependent external influences and cooperates with the prior art compensation system for compensation of the measurement values for the total displacement Δₜ of the reference point 19 of the total station 4. In such a case, the prior art compensation system handles the inclination errors due to inclination misalignments of the total station 4 in relation to the horizon. During derivation of the translational displacements of the reference point 19 of the total station 4 from the translational displacement of the upper plate 8 in relation to the base plate 7, the total station 4 may be approximated as a rigid body. The translational displacement of the upper plate 8 in relation to the base plate 7 can *i.a.* be obtained from the material effects of the components of the support arrangement, such as the length expansion or contraction δ₁ of the thread studs 9 in relation to the initial length as adjusted manually before starting measurement series by the total station 4. By comparing the length expansions or contractions of each thread stud 9, the differences of the length expansions or contractions between the thread studs 9 may be obtained and thereafter the translational displacement of the upper plate 8 in relation to the base plate 7 can be obtained using trigonometric functions. From the translational displacement of the upper plate 8 the translational displacement of the reference point 19 of the total station 4 can be obtained by suitable trigonometric calculations. Alternatively, the translational displacement of the reference point 19 of the total station 4 can be obtained directly from the comparison of the length expansions or contractions of the thread studs 9. The mathematical operations may be performed by a processor 17 located within the tribrach 3, or in a computer 17 to which the tribrach 3 is connected, or in the processor already located within the total station 4.

It should be noted that using the information derived from the translational displacements of the thread studs 9 of the tribrach 3, only the translations along the x-, y- and z-axes and the rotations around the x- and y-axes may be derived. In order to derive also a rotation around the z-axes a fixed position in relation to the ground 14 is needed to determine any time dependent external influences.

In an alternative embodiment of the present invention, the support arrangement replaces the prior art internal compensation system by taking care of the compensation of both translational displacements due to time dependent external influences and inclination errors due to inclination misalignments and due to the time dependent external influence resulting in an inclination of the upper base plate 8 in relation to the lower base plate 7, or due to a combination of them. The displacement Δₜ of the reference point 19 of the total station 4 may alternatively be expressed as a combination of the displacement, Δₙ, due to initial inclination errors and an undesired angular inclination, Δ_{α}, of the upper plate 8 in relation to the base plate 7 due to time dependent external influence, multiplied by a length of a lever between the base of plate 7 and the reference point 19 of the total station 4. By measuring the total distance between the upper plate 8 and the lower plate 7 at each thread stud 9, and comparing the distances with each other, the inclination of the upper plate 8 in relation to the lower plate 7 can be obtained. The length of the lever can be obtained as a combination of known geometric properties of the plates 7, 8 and the total station 4, and the measured distance between the plates 7, 8. The inclination error is compensated for analogously to the prior art compensation system.

A prior art tribrach 3 for a total station 4 is illustrated in figure 1 b. In an embodiment according to the invention this tribrach 3 is provided with aspects according to the present invention. The tribrach 3 (support arrangement according to the claims) comprises a first surface 7, in form of a base plate, and a second surface 8, in form of an upper plate. In addition to the features of the prior art tribrach 3 described above referring to figure 1b, interferometers 16 (not shown), which are an example of means for measuring a parameter from which a displacement of said upper plate 8 in relation to said base plate 7 at least partially may be obtained, according to the claims, are attached to the inventive tribrach 3 for measuring a distance between the plates 7, 8 (*i.e.* the first and second surfaces 7, 8) at each thread stud 9. Suitably, each thread stud 9 and the adjacent upper and lower plates 8, 7 comprise a hollow cavity, which extends in the longitudinal direction thereof and an interferometer 16 is arranged in each cavity. Thus, a laser beam of the interferometer cannot be blocked during measurements since it is encapsulated where the user may not interfere. In addition, interferometers are advantageous since they are accurate, several measurement positions may be fed by one single laser, they may be easily reset and may measure a distance without physically bridging the distance. Suitably, the interferometers are provided with the laser beam using the laser diode of the total station 4 via a fibre. Further, a temperature sensor is arranged in each cavity for measuring the temperature of the air within the cavity, since the refractive index of the medium in which the laser beam travels is influenced by the temperature of the medium. Each output of each laser beam of each interferometer 16 is suitably arranged aligned with the upper plate 8 and the laser beam is reflected at the lower plate 7. The distance between the interferometer and the surface at which the beam is reflected is obtained from the resulting interference pattern. By using the temperature of the medium within the cavity, the actual distance between the plates 7, 8 can be obtained. Depending on the desired accuracy of the measurements made by the interferometer, other environmental parameters may need being measured, such as pressure, relative humidity and CO₂-content Moreover, the tribrach 3 is provided with a processor 17, which is an example of means for obtaining the displacement of said upper plate 8 in relation to said base plate 7 according to the claims. The processor 17 receives data from the interferometers 16 and the temperature sensors and thereafter processes the data to usable information.

Further, the upper side of the upper plate 8 of the tribrach 3 comprises communication means (not shown) for communication with the total station 4 or other registration devices 4. Suitably, the communication means are in form of fixed communication means and match communication means on the underside of the total station 4. Suitably, for ensuring that the total station 4 is correctly arranged to the tribrach 3 such that the communication means function properly, the tribrach 3 is designed such that the total station 4 matches into the tribrach 3 only if the total station 4 is rotated properly in relation to the tribrach 3. Thus, the total station 4 can be arranged to the tribrach 3 in one way only.

In use, the inventive tribrach 3 is arranged similarly to the prior art tribrach on a concrete pillar, the thread studs 9 are suitably adjusted to their lowest possible positions using the foot screws 10 to reset the components of the tribrach 3.The upper plate 8 is levelled substantially horizontally using the foot screws 10 such that the bubble of the circular level 12 is centred within the circle of the circular level 12. Thereafter, a registration device 4, such as a total station is arranged on the tribrach 3. During registrations or measurements, the interferometers 16 measures the distance between the plates 7, 8, at each thread stud 9 and the temperature sensors measure the temperature at each thread stud 9 over the same time period, and suitably with same sampling interval, as the registration device 4 registers desired data.

By using the temperature data at each thread stud 9, the distance between the plates 7, 8 at each thread stud 9 at each time can be obtained from the interferometer data. By comparing the distances at each of the thread studs 9 at each time with an initial distance, the differences δ₁, δ₂, δ₃ in material effects at each thread stud 9 can be determined. By comparing the differences δ₁, δ₂, δ₃ at each thread stud with each other, the translational displacement of the upper plate 8 in relation to the base plate 7 due to time dependent external influence may be obtained and consequently, the translational displacement of the reference point 19 of the total station 4 can be obtained. By aligning the vertical axis with a local plumb line 20 according to prior art, the total displacement Δₜ can be obtained. During determination of the total displacement Δₜ, the components of the total displacement may be determined. That is, the displacement Δₜ may be divided into translational and rotational contributions, δₓₓ, δ_{xy}, δ_{xz} etc. in a Cartesian coordinate system.

Depending on accuracy and use of possible approximations during the calculations for determining the displacement Δₜ, the accuracy of the calculated displacement can be affected, and consequently, the accuracy of the compensated data from the total station 4 can be affected. By choosing a relatively high accuracy and by calculating exactly, the data from the total station 4 may be compensated even for relatively large displacements of the upper plate 8. Also, by choosing sensors having high measurement accuracy or sensors which may be calibrated to obtain a high degree of accuracy, the time dependent influence may be better registered and consequently the accuracy of the compensated data from the total station 4 may be improved in terms of smaller measurement errors.

The data from the total station 4 arranged on the tribrach 3 is compensated using a personal computer 17, which controls the total station 4 and the interferometers 16 and the temperature sensors. Thus, the data points of the data series from the total station 4 and the interferometer data from the processor 17 at each moment, may be combined together correctly using the internal clock of the personal computer. Consequently, the data from the total station 4 may be correctly compensated. Alternatively, the personal computer 17 may receive data directly from the interferometers 16 and the temperature sensors. In such a case the data from the interferometers 16 and the data from the temperature sensors are processed to usable information by the personal computer 17 and thereafter the values of the data from the total station 4 are compensated as is described above.

In an alternative embodiment of the invention, the support arrangement takes care of the compensation due to both the displacement Δₙ due to inclination misalignments and time dependent external influence. In such embodiment, the inclination is compensated similarly to the prior art compensation system.

In an alternative embodiment, the means for measuring a parameter from which a displacement of said upper plate 8 in relation to said base plate 7 at least partially may be obtained, according to the claims are in form of temperature sensors, which are attached to the inventive tribrach 3 for measuring the temperature of each thread stud 9. The temperature sensors 16 can be attached at the base plate 7 or at the upper plate 8 for measuring the temperature in the thread studs 9. Suitably, each temperature sensor 16 may be arranged in drilled holes within each thread stud 9.

By measuring the temperature in each thread stud 9 the material expansion or contraction at the thread stud 9 may be calculated using material parameters, such as a coefficient of thermal expansion or a combination of such coefficients or other coefficients, of the material or materials that the thread stud 9 is made of. By comparing the temperatures measured by the temperature sensors 16 in each of the thread studs 9, the differences in material effects at each thread stud 9 may be determined. Hence, the displacement of the upper plate 8 in relation to the base plate 7 due to thermal influence may be obtained. The origin of the thermal influence may be sunshine, wind, rain etc. as is described earlier. Since each of the thread studs 9 may be adjusted individually, the length of each thread studs 9 that may be affected due the temperature variations varies. However, during determination of the thermal influence it is assumed that all thread studs 9 are adjusted such that the length of the thread studs 9 that may be affected by the temperature variations is an average length of the possible lengths.

In an alternative embodiment, it is assumed that the materials of the base plate 7 and the upper plate 8 have similar temperature properties as the thread studs 9. Thus, it is assumed that the temperature in each corner of the base plate 7 and the upper plate 8 is equal to the temperature in the adjacent thread stud 9. For obtaining the material impact on the plates 7, 8 due to the thermal influence, material properties of the plates 7, 8 are used.

Alternatively, each corner of the upper plate 8 of the tribrach 3 may comprise a temperature sensor 16 for measuring a temperature in that corner of the upper plate 8. Thus, the influence on the upper plate 8 due to temperature variations may be accounted for more exactly, since material differences between material properties of the thread studs 9 and the upper plate 8 can be accounted for. Thus, the compensation of the value measured by the registration device may be further improved and consequently, the precision of the registration device may be further improved. Alternatively or also, each corner of the base plate 7 may comprise a temperature sensor 16 for measuring a temperature in each corner of the base plate 7. Thus, the influence on the base plate 7 due to temperature variations may be accounted for more exactly, since material differences between material properties of the thread studs 9 and the base plate 7 can be accounted for. Thus, the compensation of the value measured by the registration device 4 may be further improved and consequently, the precision of the registration device 4 may be further improved.

Alternatively, instead of using material coefficients, the determination of temperature effects may be based on a component response tests in form of measurements of such effects for the components of a tribrach 3.

The calculations for obtaining the total displacement, which comprise each separate contribution, are made by the means 17 for obtaining the displacement of said upper plate 8 in relation to said base plate 7. They generally comprise basic trigonometric mathematical functions well known in the art.

In an alternative embodiment, the tribrach 3 further comprises levelling means. The levelling means are adapted to compensate a value registered by a registration device 4, such as a total station or a theodolite, which is arranged on the tribrach 3, for the total displacement Δₜ of the reference point 19 of the registration device 4, which may be obtained from the displacement of the upper plate 8 in relation to the base plate 7. The levelling means may be included in the means 17 for obtaining the displacement or be a separate unit. Suitable levelling means are well known by a person skilled in the art and may for instance be a processor or a computational design, which processor receives data from both the means 17 for obtaining the displacement and the registration device 4 and thereafter mathematically compensates each value obtained from the registration device 4 for the displacement obtained from the means 17 for obtaining the displacement. By compensating the values obtained by the registration device 4 for the displacement Δₜ of the reference point 19 of the registration device 4 in, the changed relation between a reference point 19 of the registration device 4 and the reflector 18 is compensated for and the measurements are corrected regarding the external influence.

In an alternative embodiment, the tribrach 3 comprises position sensors arranged to each of the foot screws 10 for measurement of the distance between the base plate 7 and the upper plate 8 at each thread stud 9. Generally, a length of a longer piece of material may be affected more due to temperature variations than a shorter piece of same material, if other geometrical properties of the material are the same for both pieces. Hence, a thread stud 9, which account for a longer distance between the base plate 7 and the upper plate 8 compared to another thread stud 9 is affected more by the external influence than the another thread stud 9. Using the position sensors, the actual initial distance between the base plate 7 and the upper plate 8 at each foot screw 10 may be measured. Thus, variations due to different lengths of thread studs 9, due to adjustment of the upper plate 8 in relation to the base plate 7 using the foot screws 10, may be handled. By measuring the initial distance between the plates 7, 8 at each thread stud 9, the displacement Δₜ may be calculated more accurately, since it allows for accounting for the actual length of each thread stud 9 that may be affected by the external influence during calculation of the material expansion or contraction at each thread stud 9 using material parameters.

Further, the data from the position sensors may be used as a check that the displacement is correctly calculated. By comparing the data of the position sensors with each other, the length differences of the thread studs 9 may be determined. Thus, the longest and shortest, if the lengths are not equal, of the thread studs 9 may be found and a rough estimation of the displacement Δₚ of the upper plate 8 may be made. Thereafter, the results from the calculations of the displacement Δₚ of the upper plate 8 using temperature data may be compared with the estimation.

In an alternative embodiment, the support arrangement is provided with means for compensating for a rotation of the upper plate 8 in relation to the base plate 7 around a vertical axis, *i.e*. z-axis. In such a case a fixed reference point is needed for being able to determine the rotation correctly.

In an alternative embodiment, the inventive support arrangement 3 comprises, in addition to the features described above, a registration device 4. The registration device 4 may be a total station, a theodolite, a GNSS-antenna, an image capturing device, such as a camera, binoculars, a telescope, a microscope, a gun sight, a laser tracker, a sonar, a radar etc.

In an alternative embodiment, the means 16 for measuring a parameter from which a displacement of said upper plate 8 in relation to said base plate 7 at least partially may be obtained are in form of strain gauges arranged in the vicinity of each thread stud 9 across the distance between the base plate 7 and the upper plate 8 such that each strain gauge extends between the upper end surface of the upper plate 8 and the lower end surface of the base plate 7 along the extension of the tribrach 3. Alternatively, the strain gauges may be arranged at each corner of the tribrach 3.

In a still alternative embodiment, the means 16 for measuring a parameter from which a displacement of said upper plate 8 in relation to said base plate 7 at least partially may be obtained are in form of at least one image capturing device and the means 17 for obtaining said displacement comprises means for image analysis.

In a still alternative embodiment, the means 16 for measuring a parameter from which a displacement of said upper plate 8 in relation to said base plate 7 at least partially may be obtained are in form of at least one angle measuring device, such as an autocollimator. The calculations for determining the displacement are in such case made using basic trigonometric functions.

In an alternative embodiment, the means 16 for measuring a parameter from which a displacement of said upper plate 8 in relation to said base plate 7 at least partially may be obtained are in form of at least one gyro sensor or by one acoustic sensor.

In an alternative embodiment, the parameter obtained from the means 16 for measuring a parameter from which a displacement of said upper plate 8 in relation to said base plate 7 at least partially may be obtained is a value analogous with said displacement.

Suitably, the support arrangement may be positioned on another type of support 2. Such supports 2 may be a tripod, a brass plate, a solid rock etc. Such supports 2 may comprise an arbitrary number of legs. The compensation of the movements of the reference point 19 of the registration device 4 may also include external influences on or movements of the legs of the support 2.

Alternatively, the support arrangement may comprise an arbitrary number of support elements 9 instead of the three described above. In such a case the form of the base plate 7 and the upper plate 8 may be adjusted to fit the number of support elements 9 if desired or required.

In an alternative embodiment, the compensation of the measurement data is taken care of internally by the registration device 4 or total station 4 itself.

In an alternative embodiment, the communication between the sensors 16, the processor 17 and the registration device 4 can take place using blue tooth, IR, or other types of wireless communication incorporated in the tribrach 3 and the registration device 4.

In an alternative embodiment, the support arrangement comprises also the support 2 in form of a tripod, a concrete pillar, a brass plate, a solid rock etc.

## Claims

**1.** A support arrangement (3) for a registration device (4), forming a first surface (7) having a known position in relation to a ground (14), and a second surface (8) adapted to support a registration device (4), said first and second surfaces (7, 8) having an asserted fixed relationship, wherein said support arrangement (3) in use is subjected to external time dependent influence resulting in an undesired displacement of said second surface (8) in relation to said first surface (7),
wherein said support arrangement (3) is provided with
- means (16) for measuring a parameter from which said displacement at least partially may be obtained, and
- means (17) for obtaining said displacement or a value analogous with said displacement from said parameter.

**2.** A support arrangement according to claim 1, wherein said means for measuring said parameter is at least one temperature sensor (16) arranged between said first surface (7) and said second surface (8) to measure a temperature of said support arrangement (3).

**3.** A support arrangement according to claim 1, wherein said means for measuring said parameter is at least one strain gauge arranged along the extension of the support arrangement (3) in a direction between said first surface (7) and said second surface (8).

**4.** A support arrangement according to claim 1, wherein said means for measuring said parameter is at least one position sensor arranged along the extension of the support arrangement (3) in a direction between said first surface (7) and said second surface (8).

**5.** A support arrangement according to claim 1, wherein said means for measuring said parameter is at least one remote sensing device.

**6.** A support arrangement according to claim 5, wherein said remote sensing device is an image capturing device and said means for obtaining said displacement comprises means for image analysis.

**7.** A support arrangement according to claim 5, wherein said remote sensing device is an interferometer.

**8.** A support arrangement according to claim 5, wherein said remote sensing device is an angle measuring device, such as an autocollimator.

**9.** A support arrangement according to anyone of claims 1-8, wherein said displacement is a translation and/or an inclination.

**10.** A support arrangement according to anyone of claims 1-9, wherein said first and second surfaces (7, 8) are interconnected by length adjustable support elements (9), each support element (9) being provided with a means (16) for measuring a parameter.

**11.** A support arrangement according to claim 10, in which each means (16) for measuring a parameter is located within a longitudinal cavity of each support arrangement (9).

**12.** A support arrangement according to anyone of claims 10-11, further comprising a tribrach (3) having three adjustable support elements (9).

**13.** A support arrangement according to claim 12, wherein said support elements are thread studs (9) with corresponding foot screws (10).

**14.** A support arrangement according to anyone of claims 1-13, further comprising a registration device (4) and levelling means, said levelling means being adapted to compensate a value registered by said registration device (4) for said displacement based upon said displacement or said value analogous with said displacement.

**15.** A support arrangement according to anyone of claims 1-14, wherein said registration device (4) is a total station or a theodolite.

**16.** A system for compensating measurement data from a registration device (4) due to measurement errors, wherein said registration device (4) in use is located on a support arrangement (3) forming a first surface (7) having a known position in relation to a ground (14), and a second surface (8) adapted to support said registration device (4), said first and second surfaces (7, 8) having an asserted fixed relationship, wherein said support arrangement in use is subjected to external time dependent influence resulting in an undesired displacement of said second surface (8) in relation to said first surface (7),
wherein said system is provided with
- means (16) for measuring a parameter from which said displacement at least partially may be obtained, and
- means (17) for obtaining said displacement or a value analogous with said displacement from said parameter.

**17.** A system for compensating measurement data according to claim 16, in which said compensation is made mathematically by a processor (17).

**18.** A registration arrangement comprising a registration device (4) and a support arrangement (3), said support arrangement (3) forming a first surface (7) having a known position in relation to a ground (14), and a second surface (8) adapted to support said registration device (4), said first and second surfaces (7, 8) having an asserted fixed relationship, wherein said registration arrangement in use is subjected to external time dependent influence resulting in an undesired displacement of said second surface (8) in relation to said first surface (7),
wherein said registration arrangement is provided with
- means (16) for measuring a parameter from which said displacement at least partially may be obtained, and
- means (17) for obtaining said displacement or a value analogous with said displacement from said parameter.

**18.** A registration arrangement according to claim 17, wherein said registration device (4) is a total station.

**19.** A registration arrangement according to any one of claims 17-18, wherein said first and second surfaces (7, 8) are interconnected by length adjustable support elements (9), each support element (9) being provided with a means (16) for measuring a parameter.

**20.** A registration arrangement according to any one of claims 17-18, said support arrangement (3) further comprising a tribrach (3) having three adjustable support elements (9).

**21.** A registration arrangement according to claim 20, wherein said support elements (9) are thread studs (9) with corresponding foot screws (10).
